# EUROPEAN PATENT SPECIFICATION

(11) **EP 4 655 914 B1**
(45) Date of publication and mention of the grant of the patent: **28.10.2026**
(21) Application number: 23918794.1
(22) Date of filing: 27.01.2023
(51) Int. Cl.: H04L 9/40, G06F 21/00, H04W 12/12, G06F 21/55, G06F 21/56, H04W 12/122

(54) **DETECTING A DENIAL-OF-SERVICE (DOS) ATTACK ON AN UPSTREAM DEVICE BASED ON TRAFFIC CHARACTERISTICS**
ERKENNUNG EINES DENIAL-OF-SERVICE (DOS)-ANGRIFFS AUF EINER UPSTREAM-VORRICHTUNG AUF BASIS VON VERKEHRSEIGENSCHAFTEN
DÉTECTION D'UNE ATTAQUE PAR DÉNI DE SERVICE (DOS) SUR UN DISPOSITIF AMONT SUR LA BASE DE CARACTÉRISTIQUES DE TRAFIC

(43) Date of publication of application: 03.12.2025
(73) Proprietor: Telefonaktiebolaget LM Ericsson (publ), 164 83 Stockholm (SE)
(72) Inventor: KÖVÉR, János, 121 48 Johanneshov (SE); ABDELRAZEK, Loay, 171 65 Solna (SE); ULLAH, Ikram, Thuwal, 23955 (SA)
(74) Representative: Ericsson
(86) International application number: PCT/SE2023/050072
(87) International publication number: WO 2024/158323

(56) References cited:
- EP-A1- 3 577 872
- EP-A1- 3 577 872
- WO-A1-2022/218521
- US-B1- 10 027 694
- "Digital cellular telecommunications system (Phase 2+) (GSM); Universal Mobile Telecommunications System (UMTS); LTE; 3GPP System Architecture Evolution (SAE); Security architecture (3GPP TS 33.401 version 14.2.0 Release 14)", vol. 3GPP SA, no. V14.2.0, 11 April 2017 (2017-04-11), pages 1 - 156, XP014292318, Retrieved from the Internet <URL:http://www.etsi.org/deliver/etsi_ts/133400_133499/133401/14.02.00_60/ts_133401v140200p.pdf> [retrieved on 20170411]
- SALIM MIKAIL MOHAMMED; RATHORE SHAILENDRA; PARK JONG HYUK: "Distributed denial of service attacks and its defenses in IoT: a survey", THE JOURNAL OF SUPERCOMPUTING, SPRINGER US, NEW YORK, vol. 76, no. 7, 10 July 2019 (2019-07-10), New York, pages 5320 - 5363, XP037157462, ISSN: 0920-8542, DOI: 10.1007/s11227-019-02945-z

## Description

### TECHNICAL FIELD

The present disclosure relates to the field of detecting a denial-of-service (DoS) attack, and in particular to a radio network node detecting a DoS attack on an upstream device based on traffic characteristics in a protocol of a protocol stack for the radio access network.

### BACKGROUND

Distributed denial of service (DDoS) attacks are becoming more widespread. A DDoS attack is based on an attacker gaining control of a great number of devices connected to the Internet, thereby forming a botnet. IoT devices are constantly increasing in prevalence. The potential security issues and increasing volume of IoT devices make them targets for attackers to create botnets that can launch DDoS attacks towards targets that reside on the Internet.

There are several types of DDoS attacks. One example is the UDP flood volumetric attack. The UDP protocol is normally used in time-sensitive communications, for example voice, video, and gaming traffic. However, the UDP protocol can be used in a volumetric attack, called a UDP flood attack, since a communication channel does not need to established to transmit a UDP packet.

Similarly to a UDP flood attack, a TCP SYN (synchronise message) flood attack results in a high traffic volume but with different characteristics.

Volumetric attacks are attacks with high packet rates that attempt to cause exhaustion of resources of a server and/or network link. The UDP flood attack is a DDoS type in which many UDP packets are sent to a targeted server with the aim of overwhelming the ability of the server to receive, process and/or respond to the UDP packets. The document 3GPP TS 33.401 version 14.2.0 Release 14, 11th April 2017 (2017-04-11), defines RRC and UP protection at the PDCP layer and integrity mechanisms using PDCP COUNT values/ algorithms between UE and eNB. The document EP 3 577 872 A1, 11th December 2019 (2019-12-11), discloses an attack-detection function for wireless networks that first detects threshold-breaching traffic from multiple devices, then identifies flow changes (rate, burst interval/size, destinations) using statistics from an Aggregation Observability Function (AOF).

### SUMMARY

One object is to improve how DoS attacks are detected.

According to a first aspect, it is provided a method for detecting a denial-of-service, DoS, attack on an upstream device. The method is performed in a radio network node. The method comprises: obtaining traffic characteristics on communication between a user equipment, UE, and the radio network node, wherein the traffic characteristics are obtained for a protocol in a protocol stack for radio access network, RAN, communication between the UE and the radio network node; and determining that a DoS attack is in progress towards the upstream device based on the traffic characteristics, wherein the upstream device is provided upstream from the radio network node.

The determining that a DoS attack is in progress may comprise determining that the traffic characteristics indicate a traffic volume greater than a threshold traffic volume.

The determining that a DoS attack is in progress may comprise determining that a size distribution of protocol data units, PDUs, in the traffic characteristics deviates more than a threshold amount from a reference size distribution.

The determining that a DoS attack is in progress may comprise determining that a relationship between uplink traffic and downlink traffic in the traffic characteristics deviates more than a threshold amount from a reference value.

The determining that a DoS attack is in progress may comprise determining that a statistic of duration between PDUs deviates more than a threshold amount from a reference duration.

The statistic of duration may comprise a minimum duration between PDUs, a maximum duration between PDUs and/or an average duration between PDUs.

The determining that a DoS attack is in progress may be based on a plurality of metrics based on the traffic characteristics.

The method may further comprise: signalling an alert indicating that the DoS attack is in progress.

The determining that a DoS attack is in progress may be configured to detect a flood of user datagram protocol, UDP, packets.

The determining that a DoS attack is in progress may be configured to detect a flood of transport control protocol, TCP, synchronise, SYN, messages.

The protocol may be one of service data adaptation protocol, SDAP, packet data convergence protocol, PDCP, and radio link control, RLC.

The traffic characteristics may be based on user plane traffic.

According to a second aspect, it is provided a radio network node for detecting a denial-of-service, DoS, attack on an upstream device. The radio network node comprises: a processor; and a memory storing instructions that, when executed by the processor, cause the radio network node to: obtain traffic characteristics on communication between a user equipment, UE, and the radio network node, wherein the traffic characteristics are obtained for a protocol in a protocol stack for radio access network, RAN, communication between the UE and the radio network node; and determine that a DoS attack is in progress towards the upstream device based on the traffic characteristics, wherein the upstream device is provided upstream from the radio network node.

The instructions to determine that a DoS attack is in progress may comprise instructions that, when executed by the processor, cause the radio network node to determine that the traffic characteristics indicate a traffic volume greater than a threshold traffic volume.

The instructions to determine that a DoS attack is in progress may comprise instructions that, when executed by the processor, cause the radio network node to determine that a size distribution of protocol data units, PDUs, in the traffic characteristics deviates more than a threshold amount from a reference size distribution.

The instructions to determine that a DoS attack is in progress may comprise instructions that, when executed by the processor, cause the radio network node to determine that a relationship between uplink traffic and downlink traffic in the traffic characteristics deviates more than a threshold amount from a reference value.

The instructions to determine that a DoS attack is in progress may comprise instructions that, when executed by the processor, cause the radio network node to determine that a statistic of duration between PDUs deviates more than a threshold amount from a reference duration.

The statistic of duration may comprise a minimum duration between PDUs, a maximum duration between PDUs and/or an average duration between PDUs.

The instructions to determine that a DoS attack is in progress may comprise instructions that, when executed by the processor, cause the radio network node to determine that a DoS attack is in progress based on a plurality of metrics based on the traffic characteristics.

The radio network node may further comprise instructions that, when executed by the processor, cause the radio network node to signal an alert indicating that the DoS attack is in progress.

The instructions to determine that a DoS attack is in progress may comprise instructions that, when executed by the processor, cause the radio network node to detect a flood of user datagram protocol, UDP, packets.

The instructions to determine that a DoS attack is in progress may comprise instructions that, when executed by the processor, cause the radio network node to detect a flood of transport control protocol, TCP, synchronise, SYN, messages.

The protocol may be one of service data adaptation protocol, SDAP, packet data convergence protocol, PDCP, and radio link control, RLC.

The traffic characteristics may be based on user plane traffic.

According to a third aspect, it is provided a computer program for detecting a denial-of-service, DoS, attack on an upstream device. The computer program comprises computer program code which, when executed on a radio network node causes the radio network node to: obtain traffic characteristics on communication between a user equipment, UE, and the radio network node, wherein the traffic characteristics are obtained for a protocol in a protocol stack for radio access network, RAN, communication between the UE and the radio network node; and determine that a DoS attack is in progress towards the upstream device based on the traffic characteristics, wherein the upstream device is provided upstream from the radio network node.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a schematic diagram illustrating an embodiment of a distributed implementation of the radio network node;
Fig 3 illustrates a protocol stack comprising a set of protocols for RAN communication between the UE and the radio network node;
Figs 4A-B are flow charts illustrating embodiments of methods for detecting a DoS attack on an upstream device;
Fig 5 is a schematic diagram illustrating components of the radio network node of Fig 1;
Fig 6 is a schematic diagram showing functional modules of the radio network node of Fig 1 according to one embodiment. and
Fig 7 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, it is provided a way to detect volumetric DoS attacks initiated by a compromised UE (e.g., IoT devices or any other type of UE) connected to the radio access network (RAN). The detection is performed by the radio network node that provides the RAN. This detection is achieved by analysing traffic characteristics related to the UE in question. The content of the packets is not evaluated; the DoS detection operates without the need for deep packet inspection. This detection enables a DoS attack to be mitigated already by the radio network node, as described in more detail below.

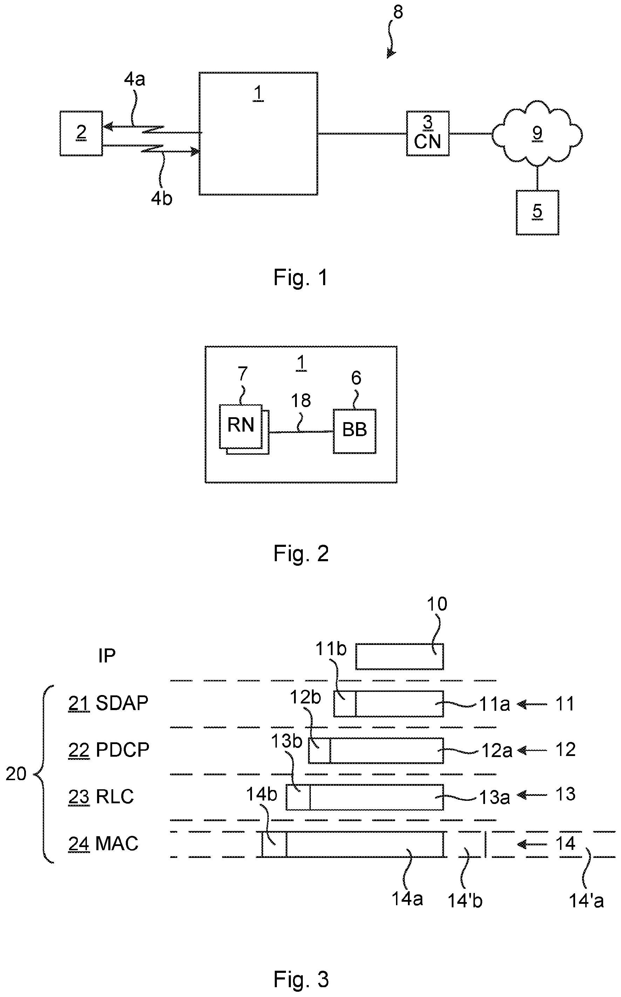

Fig 1 is a schematic diagram illustrating an environment in which embodiments presented herein can be applied. A cellular communication network 8 comprises a core network 3 and one or more radio network nodes 1 (also known as base stations) that provide a RAN for one or more UEs 2.

The radio network node 1 can be the form of radio base stations being gNode Bs, gNBs, or evolved Node Bs, also known as eNode Bs or eNBs. The radio network nodes could also be in the form of Node Bs, BTSs (Base Transceiver Stations) and/or BSSs (Base Station Subsystems), etc. The radio network node 1 provides radio connectivity using the RAN over a wireless interface 4a-b to one or more UEs 2. The radio network node 1 can be implemented in the form of a single hardware device or distributed over several devices, as illustrated in Fig 2 and explained below.

Over the wireless interface of the RAN, downlink (DL) communication 4a occurs from the radio network node 1 to the UE 2 and uplink (UL) communication 4b occurs from the UE 2 to the radio network node 1. The quality of the wireless radio interface to each UE 2 can vary over time and depending on the position of the UE 2, due to effects such as fading, multipath propagation, interference, etc.

The term UE is also known as mobile communication terminal, user device, mobile terminal, user terminal, user agent, wireless device, wireless terminal, machine-to-machine device etc., and can be implemented by, for example, what today are commonly known as a mobile phone, smartphone, IoT device, or a tablet/laptop with wireless connectivity.

The cellular communication network 8 may e.g. comply with any one or a combination of 5G NR (fifth generation new radio), LTE (Long Term Evolution), LTE-Advanced, 6G (sixth generation), W-CDMA (Wideband Code Division Multiplex), or any other current or future wireless network, as long as the principles described herein are applicable.

The radio network node 1 is connected to the core network 3 for connectivity to network central functions and a wide area network 9, such as the Internet. A server 5 is also connected to the network. Both user plane data and control plane data are transmitted over the UL and DL links 4a/4b of the RAN.

It is possible that an attacker can gain control over the UE 2 to orchestrate a denial of service (DoS) attack, e.g. targeted against a node in the core network 3 and/or the server 5. When multiple devices, such as the UE 2, are used in the same attack, it is called a distributed DoS (DDoS) attack. While each UE 2 may in this way form part of a DDoS attack, hereinafter it is referred to a DoS attack.

When a UE 2 has been compromised for DoS purposes, such a UE is denoted a DoS UE herein. One form of DoS attack is a UDP flood, in which an attacker controls a DoS UE 2 to transmits a large amount of UDP packets to a target device. Another type of DoS attack is a TCP SYN flood attack. This attack works on the same principle as the UDP flood, since the TCP SYN message is an initial message of a TCP connection establishment, and can be transmitted to a server prior to the TCP connection being established and still comply with the TCP protocol. This may be attractive from an attacker perspective since both a UDP packet and a TCP SYN packet can be sent from a compromised UE, and these packets may be repeated arbitrarily. Both the UDP flood attack and the TCP SYN flood attack are called volumetric attacks.

According to embodiments presented herein, the radio network node 1 detects a DoS attack against an upstream node (e.g. a node of the core network 3 or the server 5), where the DoS attack is (at least partly) based on traffic from the UE 2. An upstream node is to be interpreted as a node that is located more centrally from the radio network node 1, i.e. in the other topological direction than the UE and/or in the same topographical direction as the core network or wide area network, as seen from the radio network node 1.

Fig 2 is a schematic diagram illustrating an embodiment of a distributed implementation of the radio network node 1. The radio network node 1 is made up of a baseband node 6 and a radio node 7.

The radio network node 1 comprises a baseband node 10 being a baseband processing unit and one or more remote radio nodes 11. When applied in an O-RAN (Open RAN) architecture, the baseband node can be an O-DU (O-RAN distributed unit) node and the radio node can be an O-RU (O-RAN radio unit) node. In 5G terminology, e.g. according to a C-RAN (Centralised/Cloud Radio Access Network) architecture, the baseband node 10 can be a gNB-CU and the radio node 11 can be a gNB-DU.

The baseband node 10 and the radio node 11 can be in different locations. The baseband node 10 is located upstream from the radio node 11, i.e. towards the core network 3. Consequently, the radio node 11 can be located downstream from the baseband node 10, towards the UE 2. There are one or more fronthaul links 18 between the baseband node 10 and the radio node 11. The fronthaul links 18 are bidirectional communication links. The fronthaul links 18 can be implemented using a Common Public Radio Interface (CPRI) or eCPRI (evolved CPRI) and Ethernet. Multiple fronthaul links can be employed in other topologies than what is shown in Fig 1. Multiple fronthaul links can also be denoted a fronthaul network. The baseband node 10 and the radio node 11 can each implement subsets of functionality of the RAN for radio communication with the UE 2. Furthermore, some functionality for the radio communication can be virtualized, also known as cloud RAN.

Fig 3 illustrates a protocol stack 20 comprising a set of protocols 21, 22, 23, 24 of the RAN communication between the UE 2 and the radio network node 1 of Fig 1. The protocol stack 20 is here illustrated for transferring an IP packet 10 over the RAN. The protocol stack is made up of a service data adaptation protocol (SDAP) 21, a packet data convergence protocol (PDCP) 22, and a radio link control (RLC) 23. On the lowest level, there is a media access control (MAC) protocol 24.

Each protocol 21 - 24, takes a service data unit (SDU) 10, 11, 12, 13 from a higher protocol layer to form the payload 11a, 12a, 13a, 14a. The protocol 21 - 24 then adds protocol specific control data, e.g. headers 11b, 12b, 13b, 14b, to produce a respective protocol data unit (PDU) 11, 12, 13, 14. The PDU is provided to the next lower layer in the protocol stack 20, forming the SDU for that layer.

The MAC layer 24 can combine multiple SDUs from the RLC layer 23 in a single PDU 14 (comprising respective payloads 14a, 14'a and headers 14b, 14b'). In other words, a MAC PDU transport block is formed by one or several MAC PDUs. For SDAP, PDCP and RLC, there is a one-to-one relationship between PDU 11, 12, 13 and IP packet 10.

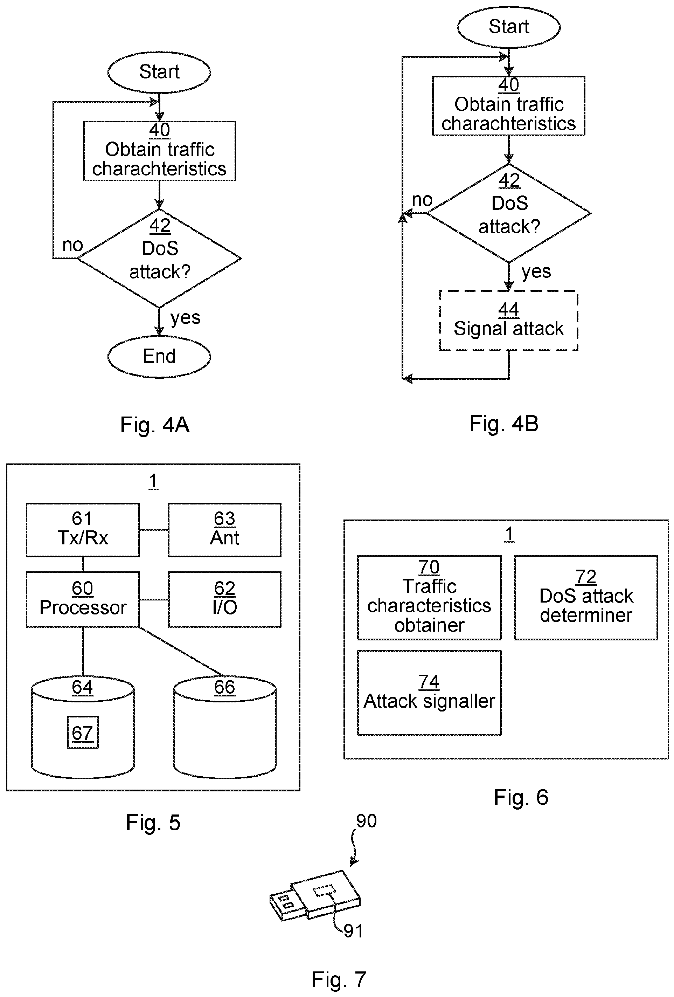

Figs 4A-B are flow charts illustrating embodiments of methods for detecting a DoS attack on an upstream device, such as the core network 3 or the server 5 of Fig 1. The method is performed in a radio network node 1. First, embodiments illustrated by Fig 4A will be described.

In an *obtain traffic characteristics* step 40, the radio network node 1 obtains traffic characteristics on communication between a UE 2 and the radio network node 1. The traffic characteristics are obtained for a protocol 21, 22, 23, 24 in a protocol stack 20 (see Fig 3) for RAN communication between the UE 2 and the radio network node 1. The traffic characteristics comprise one or more metrics that are derived from traffic occurring between the UE 2 and the radio network node 1, in UL and/or DL. The protocol can be one of SDAP, PDCP and RLC.

In one embodiment, the traffic characteristics contains a metric being statistic of duration between PDUs. The statistic of duration can e.g. comprise a minimum duration between PDUs, a maximum duration between PDUs and/or an average duration between PDUs.

The traffic characteristics are based on user plane traffic, i.e. not RAN control plane traffic. The user plane traffic can e.g. occur over the Uu interface provided for a UE by the radio network node 1. Nevertheless, user plane traffic can include control signalling for higher protocols, e.g. TCP SYN messages. In any case, embodiments presented herein do not rely on inspection of the content of the packets.

In a conditional *DoS attack* step 42, the radio network node 1 determines whether a DoS attack is in progress towards the upstream device 3 based on the traffic characteristics. The upstream device is external to the radio network node 1 and is provided upstream from the radio network node 1.

The DoS attack can be detected based on the traffic characteristics indicating a traffic volume greater than a threshold traffic volume. Traffic volume can e.g. be defined as number of packets (PDUs) per unit of time, e.g. packets per second.

One simulated example is a UDP flood attack that is generated from a DoS UE in the form of a computationally constrained device (e.g. Raspberry Pi). In this simulation, the DoS UE can generate 4,504 PDCP PDUs. When a webpage is fetched using the HTTP protocol, the number of PDCP PDUs generated is around 848 UL PDCP PDUs (which of course depends on the webpage and its contents, and the number of webpages rendered at the same time). For an IoT use case, the UE generates 192 UL PDCP PDUs in 1 second. It is thus evident that in the DoS scenario, the UE generates significantly more traffic. A threshold can then be configured to a suitable number of PDUs per second.

Alternatively or additionally, the DoS attack can be detected based on determining that a size distribution of PDUs in the traffic characteristics deviates more than a threshold amount from a reference size distribution. The size distribution can e.g. be measured using standard deviation of PDUs or any other suitable variation measurement. When a DoS attack occurs, the packets are typically very uniform, or even completely static, in size. In contrast, for normal traffic, the size of packets varies greatly.

Alternatively or additionally, the DoS attack can be detected based on determining that a relationship (e.g. ratio) between UL traffic and DL traffic in the traffic characteristics deviates more than a threshold amount from a reference value. The relationship between the UL traffic and the DL can e.g. be expressed as a ration between them, or proportion of DL (or UL) traffic of all traffic. In a DoS attack, some of the upstream targets may not be responsive or may not even exist. Another possibility is that the IP address exists, but there is not service listening to UDP port that corresponds to the UDP packet of the DoS attack. Another possibility is that the source IP address of the upstream packet is spoofed, and the return traffic from the upstream target is directed to the spoofed IP address. Even if the upstream target is listening on the UDP port of the UDP packet, the target might not respond. In any case, the ratio between UL packets and DL packets is significantly higher in a DoS attack compared to regular traffic.

Alternatively or additionally, the DoS attack can be detected based on determining that a statistic of duration between PDUs deviates more than a threshold amount from a reference duration. For instance, for high packet rate traffic, that is the case with DoS attacks, the time difference between packets will be very low. Hence, by evaluating the duration between PDUs, it can be derived whether uplink traffic is a part of a DoS attack or not.

As mentioned above, one RLC PDU can contain one or more PDCP PDU. This is a feature that can be used as an indicator of a DoS attack, since a high IP packet rate results in shorter intervals between PDCP PDUs, which increases the extent of concatenating multiple PDCP PDUs in one RLC PDU. This can be detected using the RLC PDU size distribution for a given time.

Alternatively or additionally, the DoS attack can be detected based on a plurality of metrics based on the traffic characteristics. By combining multiple metrics, greater accuracy in DoS detection is achieved.

The radio network node 1 can be configured to detect any volumetric DoS attack, such as a flood of UDP packets and/or a flood of TCP SYN messages.

When a DoS attack is not determined, the method returns to the *obtain traffic characteristics* step 40. When a DoS attack is determined, this can be used internally or externally, after which the method can end or return to the *obtain traffic characteristics* step 40.

Looking now to Fig 4B, only new or modified steps, compared to Fig 4A, will be described.

In an optional *signal attack* step 44, the radio network node 1, the radio network node 1 signals an alert indicating that the DoS attack is in progress.

This signalling can occur locally within the radio network node 1. In this case, the radio network node 1 can act as the PEP (policy enforcement point), e.g. by denying (or restricting) radio resources for the DoS UE. Hence, the DoS UE has no radio access, which prevents the DoS UE from sending any (or excessive amount of) traffic. This provides a quick response to a detected attack. Since the embodiments presented herein are implemented in the radio network node 1, this node has power over scheduling and enables response and mitigation of the attack to occur quickly and with substantial effect.

Alternatively or additionally, the signalling of the DoS Attack occurs from the radio network node 1 to the core network 3. In this case, the radio network node 1 acts as a policy decision point (PDP) while a network node within the core network acts as the PEP. For instance, the access and mobility management function (AMF) of the core network can act as the PEP. In this way, the AMF can use alerts, attack information, DoS UE information, that is provided from the radio network node 1, to act on it and respond to the DoS UE, by for example de-registering or quarantining the DoS UE from the network.

The results of a simulation to illustrate how DoS can be detected will now be described. The simulated DoS is a UDP flood attack, but the same principles are applicable for TCP SYN floods or other volumetric DoS attacks. In the simulation, the UE is a Raspberry Pi, acting as a DoS UE in the form of a IoT controller that normally communicates with robotic arms.

The UE has specific traffic pattern for benign traffic. This benign traffic has the following characteristics:
- TCP protocol traffic sending packets to the robotic arms.
- 160-320 bytes packets are sent every 10ms.
- A few packets of size 1514 bytes are sent every 200-500ms.

Additionally, the UE is simulated, in a mixed traffic scenario, to send UDP flood attacks, in certain periods of time. Hence, malicious traffic is mixed with the benign traffic over time. The simulation was configured to run for 30 seconds, where the attack episode is run for 10 seconds in the middle of the 30 seconds, targeting a /24 subnet. The results are compared to running only benign traffic.

First a simulation with only benign traffic is described. A distribution of PDCP PDU size follows the traffic specification of the use case mentioned above. The minimum duration between PDCP PDUs is 0.018msec, the maximum duration between PDCP PDUs is 241 msec, and the mean duration between PDCP PDUs is 9.7 msec. Additionally, the total number of UL PDCP PDUs is 3126, the ratio between UL PDCP and DL PDCP is 3126:2697. Hence, the PDCP UL PDUs made up 54% of the total traffic compared to the PDCP DL PDUs that made up 46% of the total traffic.

Now the results of a simulation of mixed traffic, containing both benign and malicious traffic, is presented. The experiment ran for 30 seconds, of which 10 seconds contained the attack with malicious traffic. The benign traffic was of the same type as the benign traffic described above. The malicious traffic targeted a /24 subnet, where there were several targets responding on the service of interest. The UDP payload was set to a size of 512 bytes.

The PDCP PDU size distribution changes during the malicious traffic. In particular, the size distribution, e.g. standard deviation, of PDCP PDUs decreases significantly during the attack due to the uniform packet size of the UDP flood packets. Additionally, during the attack, the minimum time interval between PDCP PDUs drops to 0.014 msec since the attacker wants to maximise output of UDP flood packets. In terms of the relationship between UL traffic and DL traffic, during the attack, the number of PDCP UL PDUs increased to 46,807 making up 89% of total traffic, and the PDCP DL PDUs count was 5,850, thus forming only 11% of the total traffic. It can thus be seen that the UL proportion of traffic increases significantly during an attack.

Embodiments presented herein do not examine or analyse any IP packets that are being carried in the radio protocols. Instead, metrics of the traffic characteristics are examined and analysed. This enables DoS attack detection even when IP packets are hidden or obscured, such as through encryption, from the radio network node 1.

Since the DoS attack is detected by the radio network node 1 that is topologically close to the compromised UE, the DoS attack can be detected faster and addressed better.

Detection by the radio network node 1 also enables the radio network node 1 to apply a local response and mitigation actions. For instance, the radio network node 1 can deny radio resources for DoS UEs, which reduces effects on the RAN by a DoS UE, in addition to mitigating the attack on the upstream target device. Moreover, also telecommunication infrastructure can be protected, e.g. by reducing or eliminating DoS traffic that might otherwise consume bandwidth the backhaul network to the core network. Also, embodiments presented herein resolve scalability issues in the network, whereby the need for additional DoS detection solutions is reduced.

Fig 5 is a schematic diagram illustrating components of the radio network node 1 of Fig 1. A processor 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Figs 4A and 4B above.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The radio network node 1 further comprises an I/O interface 62 for communicating with external and/or internal entities. Optionally, the I/O interface 62 also includes a user interface.

A transceiver 61 comprises suitable analogue and digital components to allow signal transmission and signal reception with UEs using one or more antennas 63.

Other components of the radio network node 1 are omitted in order not to obscure the concepts presented herein.

Fig 6 is a schematic diagram showing functional modules of the radio network node 1 of Fig 1 according to one embodiment. The modules are implemented using software instructions such as a computer program executing in the radio network node 1. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figs 4A and 4B.

A traffic characteristics obtainer 70 corresponds to step 40. A DoS attack determiner 72 corresponds to step 42. An attack signaller 74 corresponds to step 44.

Fig 7 shows one example of a computer program product 90 comprising computer readable means. On this computer readable means, a computer program 91 can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 5. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for detecting a denial-of-service, DoS, attack on an upstream device (3, 5), the method being performed in a radio network node (1), the method comprising:
obtaining (40) traffic characteristics on communication between a user equipment (2), UE, and the radio network node (1), wherein the traffic characteristics are obtained for a protocol (21, 22, 23, 24) in a protocol stack (20) for radio access network, RAN, communication between the UE (2) and the radio network node (1), wherein the protocol is one of service data adaptation protocol, SDAP, packet data convergence protocol, PDCP, and radio link control, RLC; and
determining (42) that a DoS attack is in progress towards the upstream device (3, 5) based on the traffic characteristics, wherein the upstream device (3, 5) is provided upstream from the radio network node (1).

2. The method according to claim 1, wherein the determining (42) that a DoS attack is in progress comprises determining that the traffic characteristics indicate a traffic volume greater than a threshold traffic volume.

3. The method according to claim 1 or 2, wherein the determining (42) that a DoS attack is in progress comprises determining that a size distribution of protocol data units, PDUs, in the traffic characteristics deviates more than a threshold amount from a reference size distribution.

4. The method according to any one of the preceding claims, wherein the determining (42) that a DoS attack is in progress comprises determining that a relationship between uplink traffic and downlink traffic in the traffic characteristics deviates more than a threshold amount from a reference value.

5. The method according to any one of the preceding claims, wherein the determining (42) that a DoS attack is in progress comprises determining that a statistic of duration between PDUs deviates more than a threshold amount from a reference duration.

6. The method according to claim 5, wherein the statistic of duration comprises a minimum duration between PDUs, a maximum duration between PDUs and/or an average duration between PDUs.

7. The method according to any one of the preceding claims, wherein the determining (42) that a DoS attack is in progress is based on a plurality of metrics based on the traffic characteristics.

8. The method according to any one of the preceding claims, further comprising:
signalling (44) an alert indicating that the DoS attack is in progress.

9. The method according to any one of the preceding claims, wherein the determining (42) that a DoS attack is in progress is configured to detect a flood of user datagram protocol, UDP, packets.

10. The method according to any one of the preceding claims, wherein the determining (42) that a DoS attack is in progress is configured to detect a flood of transport control protocol, TCP, synchronise, SYN, messages.

11. The method according to any one of the preceding claims, wherein the traffic characteristics are based on user plane traffic.

12. A radio network node (1) for detecting a denial-of-service, DoS, attack on an upstream device (3, 5), the radio network node (1) comprising:
a processor (60); and
a memory (64) storing instructions (67) that, when executed by the processor, cause the radio network node (1) to:
obtain traffic characteristics on communication between a user equipment (2), UE, and the radio network node (1), wherein the traffic characteristics are obtained for a protocol (21, 22, 23, 24) in a protocol stack (20) for radio access network, RAN, communication between the UE (2) and the radio network node (1), wherein the protocol is one of service data adaptation protocol, SDAP, packet data convergence protocol, PDCP, and radio link control, RLC; and
determine that a DoS attack is in progress towards the upstream device (3, 5) based on the traffic characteristics, wherein the upstream device (3, 5) is provided upstream from the radio network node (1).

13. The radio network node (1) according to claim 12, wherein the instructions to determine that a DoS attack is in progress comprise instructions (67) that, when executed by the processor, cause the radio network node (1) to determine that the traffic characteristics indicate a traffic volume greater than a threshold traffic volume.

14. The radio network node (1) according to claim 12 or 13, wherein the instructions to determine that a DoS attack is in progress comprise instructions (67) that, when executed by the processor, cause the radio network node (1) to determine that a size distribution of protocol data units, PDUs, in the traffic characteristics deviates more than a threshold amount from a reference size distribution.

15. The radio network node (1) according to any one of claims 12 to 14, wherein the instructions to determine that a DoS attack is in progress comprise instructions (67) that, when executed by the processor, cause the radio network node (1) to determine that a relationship between uplink traffic and downlink traffic in the traffic characteristics deviates more than a threshold amount from a reference value.

16. The radio network node (1) according to any one of claims 12 to 15, wherein the instructions to determine that a DoS attack is in progress comprise instructions (67) that, when executed by the processor, cause the radio network node (1) to determine that a statistic of duration between PDUs deviates more than a threshold amount from a reference duration.

17. The radio network node (1) according to claim 16, wherein the statistic of duration comprises a minimum duration between PDUs, a maximum duration between PDUs and/or an average duration between PDUs.

18. The radio network node (1) according to any one of claims 12 to 17, wherein the instructions to determine that a DoS attack is in progress comprise instructions (67) that, when executed by the processor, cause the radio network node (1) to determine that a DoS attack is in progress based on a plurality of metrics based on the traffic characteristics.

19. The radio network node (1) according to any one of claims 12 to 18, further comprising instructions (67) that, when executed by the processor, cause the radio network node (1) to signal an alert indicating that the DoS attack is in progress.

20. The radio network node (1) according to any one of claims 12 to 19, wherein the instructions to determine that a DoS attack is in progress comprise instructions (67) that, when executed by the processor, cause the radio network node (1) to detect a flood of user datagram protocol, UDP, packets.

21. A computer program (67, 91) for detecting a denial-of-service, DoS, attack on an upstream device (3, 5), the computer program comprising computer program code which, when executed on a radio network node (1) causes the radio network node (1) to:
obtain traffic characteristics on communication between a user equipment (2), UE, and the radio network node (1), wherein the traffic characteristics are obtained for a protocol (21, 22, 23, 24) in a protocol stack (20) for radio access network, RAN, communication between the UE (2) and the radio network node (1), wherein the protocol is one of service data adaptation protocol, SDAP, packet data convergence protocol, PDCP, and radio link control, RLC; and
determine that a DoS attack is in progress towards the upstream device (3, 5) based on the traffic characteristics, wherein the upstream device (3, 5) is provided upstream from the radio network node (1).

22. A computer program product (64, 90) comprising a computer program according to claim 21 and a computer readable means comprising non-transitory memory in which the computer program is stored.

## Patentansprüche

1. Verfahren zur Erkennung eines Denial-of-Service-Angriffs, DoS-Angriffs, auf eine Upstream-Vorrichtung (3, 5), wobei das Verfahren in einem Funknetzwerkknoten (1) durchgeführt wird, wobei das Verfahren Folgendes umfasst:
Erhalten (40) von Verkehrseigenschaften bei Kommunikation zwischen einer Benutzereinrichtung, UE, (2) und dem Funknetzwerkknoten (1), wobei die Verkehrseigenschaften für ein Protokoll (21, 22, 23, 24) in einem Protokollstapel (20) für Funkzugangsnetzwerkkommunikation, RAN-Kommunikation, zwischen der UE (2) und dem Funknetzwerkknoten (1) erhalten werden, wobei es sich bei dem Protokoll um eines von einem Dienstdatenanpassungsprotokoll, SDAP, einem Paketdaten-Konvergenzprotokoll, PDCP, und Funkverbindungssteuerung, RLC, handelt; und
Bestimmen (42), dass ein DoS-Angriff auf die Upstream-Vorrichtung (3, 5) im Gange ist, basierend auf den Verkehrseigenschaften, wobei die Upstream-Vorrichtung (3, 5) im Upstream vom Funknetzwerkknoten (1) vorgesehen ist.

2. Verfahren nach Anspruch 1, wobei das Bestimmen (42), dass ein DoS-Angriff im Gange ist, Bestimmen umfasst, dass die Verkehrseigenschaften ein Verkehrsvolumen anzeigen, dass größer als ein Verkehrsvolumenschwellenwert ist.

3. Verfahren nach Anspruch 1 oder 2, wobei das Bestimmen (42), dass ein DoS-Angriff im Gange ist, Bestimmen umfasst, dass eine Größenverteilung von Protokolldateneinheiten, PDUs, in den Verkehrseigenschaften um mehr als einen Schwellenbetrag von einer Referenzgrößenverteilung abweicht.

4. Verfahren nach einem der vorhergehenden Ansprüche, wobei das Bestimmen (42), dass ein DoS-Angriff im Gange ist, Bestimmen umfasst, dass eine Beziehung zwischen Uplink-Verkehr und Downlink-Verkehr in den Verkehrseigenschaften um mehr als einen Schwellenbetrag von einem Referenzwert abweicht.

5. Verfahren nach einem der vorhergehenden Ansprüche, wobei das Bestimmen (42), dass ein DoS-Angriff im Gange ist, Bestimmen umfasst, dass eine Statistik der Dauer zwischen PDUs um mehr als einen Schwellenbetrag von einer Referenzdauer abweicht.

6. Verfahren nach Anspruch 5, wobei die Statistik der Dauer eine minimale Dauer zwischen PDUs, eine maximale Dauer zwischen PDUs und/oder eine mittlere Dauer zwischen PDUs umfasst.

7. Verfahren nach einem der vorhergehenden Ansprüche, wobei das Bestimmen (42), dass ein DoS-Angriff im Gange ist, auf einer Mehrzahl von Metriken basiert, die auf den Verkehrseigenschaften basieren.

8. Verfahren nach einem der vorhergehenden Ansprüche, ferner umfassend:
Signalisieren (44) einer Warnung, die anzeigt, dass der DoS-Angriff im Gange ist.

9. Verfahren nach einem der vorhergehenden Ansprüche, wobei das Bestimmen (42), dass ein DoS-Angriff im Gange ist, dazu konfiguriert ist, eine Flut von User Datagram Protocol-Paketen, UDP-Paketen, zu erkennen.

10. Verfahren nach einem der vorhergehenden Ansprüche, wobei das Bestimmen (42), dass ein DoS-Angriff im Gange ist, dazu konfiguriert ist, eine Flut von Transport Control Protocol-Synchronisationsnachrichten, TCP-SYNC-Nachrichten, zu erkennen.

11. Verfahren nach einem der vorhergehenden Ansprüche, wobei die Verkehrseigenschaften auf Benutzerebenenverkehr basieren.

12. Funknetzwerkknoten (1) zum Erkennen eines Denial-of-Service-Angriffs, DoS-Angriffs, auf eine Upstream-Vorrichtung (3, 5), wobei der Funknetzwerkknoten (1) Folgendes umfasst:
einen Prozessor (60); und
einen Speicher (64), der Anweisungen (67) speichert, die bei Ausführung durch den Prozessor den Funknetzwerkknoten (1) zu Folgendem veranlassen:
Erhalten von Verkehrseigenschaften bei Kommunikation zwischen einer Benutzereinrichtung, UE, (2) und dem Funknetzwerkknoten (1), wobei die Verkehrseigenschaften für ein Protokoll (21, 22, 23, 24) in einem Protokollstapel (20) für Funkzugangsnetzwerkkommunikation, RAN-Kommunikation, zwischen der UE (2) und dem Funknetzwerkknoten (1) erhalten werden, wobei es sich bei dem Protokoll um eines von einem Dienstdatenanpassungsprotokoll, SDAP, einem Paketdaten-Konvergenzprotokoll, PDCP, und Funkverbindungssteuerung, RLC, handelt; und
Bestimmen, dass ein DoS-Angriff auf die Upstream-Vorrichtung (3, 5) im Gange ist, basierend auf den Verkehrseigenschaften, wobei die Upstream-Vorrichtung (3, 5) im Upstream vom Funknetzwerkknoten (1) vorgesehen ist.

13. Funknetzwerkknoten (1) nach Anspruch 12, wobei die Anweisungen zum Bestimmen, dass ein DoS-Angriff im Gange ist, Anweisungen (67) umfassen, die bei Ausführung durch den Prozessor den Funknetzwerkknoten (1) veranlassen, zu bestimmen, dass die Verkehrseigenschaften ein Verkehrsvolumen anzeigen, das größer als ein Verkehrsvolumenschwellenwert ist.

14. Funknetzwerkknoten (1) nach Anspruch 12 oder 13, wobei die Anweisungen zum Bestimmen, dass ein DoS-Angriff im Gange ist, Anweisungen (67) umfassen, die bei Ausführung durch den Prozessor den Funknetzwerkknoten (1) veranlassen, zu bestimmen, dass eine Größenverteilung von Protokolldateneinheiten, PDUs, in den Verkehrseigenschaften um mehr als einen Schwellenbetrag von einer Referenzgrößenverteilung abweicht.

15. Funknetzwerkknoten (1) nach ein einem der Ansprüche 12 bis 14, wobei die Anweisungen zum Bestimmen, dass ein DoS-Angriff im Gange ist, Anweisungen (67) umfassen, die bei Ausführung durch den Prozessor den Funknetzwerkknoten (1) veranlassen, zu bestimmen, dass eine Beziehung zwischen Uplink-Verkehr und Downlink-Verkehr in den Verkehrseigenschaften um mehr als einen Schwellenbetrag von einem Referenzwert abweicht.

16. Funknetzwerkknoten (1) nach einem der Ansprüche 12 bis 15, wobei die Anweisungen zum Bestimmen, dass ein DoS-Angriff im Gange ist, Anweisungen (67) umfassen, die bei Ausführung durch den Prozessor den Funknetzwerkknoten (1) veranlassen, zu bestimmen, dass eine Statistik der Dauer zwischen PDUs in den Verkehrseigenschaften um mehr als einen Schwellenbetrag von einer Referenzdauer abweicht.

17. Funknetzwerkknoten (1) nach Anspruch 16, wobei die Statistik der Dauer eine minimale Dauer zwischen PDUs, eine maximale Dauer zwischen PDUs und/oder eine mittlere Dauer zwischen PDUs umfasst.

18. Funknetzwerkknoten (1) nach einem der Ansprüche 12 bis 17, wobei die Anweisungen zum Bestimmen, dass ein DoS-Angriff im Gange ist, Anweisungen (67) umfassen, die bei Ausführung durch den Prozessor den Funknetzwerkknoten (1) veranlassen, zu bestimmen, dass ein DoS-Angriff im Gange ist, auf einer Mehrzahl von Metriken basieren, die auf den Verkehrseigenschaften basieren.

19. Funknetzwerkknoten (1) nach einem der Ansprüche 12 bis 18, ferner umfassend Anweisungen (67), die bei Ausführung durch den Prozessor den Funknetzwerkknoten (1) veranlassen, eine Warnung zu signalisieren, die anzeigt, dass der DoS-Angriff im Gange ist.

20. Funknetzwerkknoten (1) nach einem der Ansprüche 12 bis 19, wobei die Anweisungen zum Bestimmen, dass ein DoS-Angriff im Gange ist, Anweisungen (67) umfassen, die bei Ausführung durch den Prozessor den Funknetzwerkknoten (1) veranlassen, eine Flut von User Datagram Protocol-Paketen, UDP-Paketen, zu erkennen.

21. Computerprogramm (67, 91) zum Erkennen eines Denial-of-Service-Angriffs, DoS-Angriffs, auf eine Upstream-Vorrichtung (3, 5), wobei das Computerprogramm Computerprogrammcode umfasst, der bei Ausführung auf einem Funknetzwerkknoten (1) den Funknetzwerkknoten (1) zu Folgendem veranlasst:
Erhalten von Verkehrseigenschaften bei Kommunikation zwischen einer Benutzereinrichtung, UE, (2) und dem Funknetzwerkknoten (1), wobei die Verkehrseigenschaften für ein Protokoll (21, 22, 23, 24) in einem Protokollstapel (20) für Funkzugangsnetzwerkkommunikation, RAN-Kommunikation, zwischen der UE (2) und dem Funknetzwerkknoten (1) erhalten werden, wobei es sich bei dem Protokoll um eines von einem Dienstdatenanpassungsprotokoll, SDAP, einem Paketdaten-Konvergenzprotokoll, PDCP, und Funkverbindungssteuerung, RLC, handelt; und
Bestimmen, dass ein DoS-Angriff auf die Upstream-Vorrichtung (3, 5) im Gange ist, basierend auf den Verkehrseigenschaften, wobei die Upstream-Vorrichtung (3, 5) im Upstream vom Funknetzwerkknoten (1) vorgesehen ist.

22. Computerprogrammprodukt (64, 90), umfassend ein Computerprogramm nach Anspruch 21 und ein computerlesbares Medium, das einen nichtflüchtigen Speicher umfasst, auf dem das Computerprogramm gespeichert ist.

## Revendications

1. Procédé de détection d'une attaque par déni de service, DoS, sur un dispositif amont (3, 5), le procédé étant réalisé dans un nœud de réseau radio (1), le procédé comprenant :
l'obtention (40) de caractéristiques de trafic sur une communication entre un équipement utilisateur (2), UE, et le nœud de réseau radio (1), dans lequel les caractéristiques de trafic sont obtenues pour un protocole (21, 22, 23, 24) dans une pile de protocoles (20) pour une communication de réseau d'accès radio, RAN, entre l'UE (2) et le nœud de réseau radio (1), dans lequel le protocole est l'un parmi un protocole d'adaptation de données de service, SDAP, un protocole de convergence de données en paquets, PDCP, et une commande de liaison radio, RLC ; et
la détermination (42) qu'une attaque DoS est en cours vers le dispositif amont (3, 5) sur la base des caractéristiques de trafic, dans lequel le dispositif amont (3, 5) est prévu en amont du nœud de réseau radio (1).

2. Procédé selon la revendication 1, dans lequel la détermination (42) qu'une attaque DoS est en cours comprend la détermination que les caractéristiques de trafic indiquent un volume de trafic supérieur à un volume de trafic seuil.

3. Procédé selon la revendication 1 ou 2, dans lequel la détermination (42) qu'une attaque DoS est en cours comprend la détermination qu'une distribution de taille d'unités de données de protocole, PDU, dans les caractéristiques de trafic s'écarte de plus d'une quantité seuil par rapport à une distribution de taille de référence.

4. Procédé selon l'une quelconque des revendications précédentes, dans lequel la détermination (42) qu'une attaque DoS est en cours comprend la détermination qu'une relation entre un trafic de liaison montante et un trafic de liaison descendante dans les caractéristiques de trafic s'écarte de plus d'une quantité seuil par rapport à une valeur de référence.

5. Procédé selon l'une quelconque des revendications précédentes, dans lequel la détermination (42) qu'une attaque DoS est en cours comprend la détermination qu'une statistique de durée entre des PDU s'écarte de plus d'une quantité seuil par rapport à une durée de référence.

6. Procédé selon la revendication 5, dans lequel la statistique de durée comprend une durée minimale entre des PDU, une durée maximale entre des PDU et/ou une durée moyenne entre des PDU.

7. Procédé selon l'une quelconque des revendications précédentes, dans lequel la détermination (42) qu'une attaque DoS est en cours est basée sur une pluralité de métriques basées sur les caractéristiques de trafic.

8. Procédé selon l'une quelconque des revendications précédentes, comprenant en outre :
la signalisation (44) d'une alerte indiquant que l'attaque DoS est en cours.

9. Procédé selon l'une quelconque des revendications précédentes, dans lequel la détermination (42) qu'une attaque DoS est en cours est configurée pour détecter une inondation de paquets de protocole de datagramme utilisateur, UDP.

10. Procédé selon l'une quelconque des revendications précédentes, dans lequel la détermination (42) qu'une attaque DoS est en cours est configurée pour détecter une inondation de messages de synchronisation, SYN, de protocole de commande de transport, TCP.

11. Procédé selon l'une quelconque des revendications précédentes, dans lequel les caractéristiques de trafic sont basées sur un trafic de plan utilisateur.

12. Nœud de réseau radio (1) pour la détection d'une attaque par déni de service, DoS, sur un dispositif amont (3, 5), le nœud de réseau radio (1) comprenant :
un processeur (60) ; et
une mémoire (64) stockant des instructions (67) qui, lorsqu'elles sont exécutées par le processeur, amènent le nœud de réseau radio (1) à :
obtenir des caractéristiques de trafic sur une communication entre un équipement utilisateur (2), UE, et le nœud de réseau radio (1), dans lequel les caractéristiques de trafic sont obtenues pour un protocole (21, 22, 23, 24) dans une pile de protocoles (20) pour une communication de réseau d'accès radio, RAN, entre l'UE (2) et le nœud de réseau radio (1), dans lequel le protocole est l'un parmi un protocole d'adaptation de données de service, SDAP, un protocole de convergence de données en paquets, PDCP, et une commande de liaison radio, RLC ; et
déterminer qu'une attaque DoS est en cours vers le dispositif amont (3, 5) sur la base des caractéristiques de trafic, dans lequel le dispositif amont (3, 5) est prévu en amont du nœud de réseau radio (1).

13. Nœud de réseau radio (1) selon la revendication 12, dans lequel les instructions pour déterminer qu'une attaque DoS est en cours comprennent des instructions (67) qui, lorsqu'elles sont exécutées par le processeur, amènent le nœud de réseau radio (1) à déterminer que les caractéristiques de trafic indiquent un volume de trafic supérieur à un volume de trafic seuil.

14. Nœud de réseau radio (1) selon la revendication 12 ou 13, dans lequel les instructions pour déterminer qu'une attaque DoS est en cours comprennent des instructions (67) qui, lorsqu'elles sont exécutées par le processeur, amènent le nœud de réseau radio (1) à déterminer qu'une distribution de taille d'unités de données de protocole, PDU, dans les caractéristiques de trafic s'écarte de plus d'une quantité seuil par rapport à une distribution de taille de référence.

15. Nœud de réseau radio (1) selon l'une quelconque des revendications 12 à 14, dans lequel les instructions pour déterminer qu'une attaque DoS est en cours comprennent des instructions (67) qui, lorsqu'elles sont exécutées par le processeur, amènent le nœud de réseau radio (1) à déterminer qu'une relation entre un trafic de liaison montante et un trafic de liaison descendante dans les caractéristiques de trafic s'écarte de plus d'une quantité seuil par rapport à une valeur de référence.

16. Nœud de réseau radio (1) selon l'une quelconque des revendications 12 à 15, dans lequel les instructions pour déterminer qu'une attaque DoS est en cours comprennent des instructions (67) qui, lorsqu'elles sont exécutées par le processeur, amènent le nœud de réseau radio (1) à déterminer qu'une statistique de durée entre des PDU s'écarte de plus d'une quantité seuil par rapport à une durée de référence.

17. Nœud de réseau radio (1) selon la revendication 16, dans lequel la statistique de durée comprend une durée minimale entre des PDU, une durée maximale entre des PDU et/ou une durée moyenne entre des PDU.

18. Nœud de réseau radio (1) selon l'une quelconque des revendications 12 à 17, dans lequel les instructions pour déterminer qu'une attaque DoS est en cours comprennent des instructions (67) qui, lorsqu'elles sont exécutées par le processeur, amènent le nœud de réseau radio (1) à déterminer qu'une attaque DoS est en cours sur la base d'une pluralité de métriques basées sur les caractéristiques de trafic.

19. Nœud de réseau radio (1) selon l'une quelconque des revendications 12 à 18, comprenant en outre des instructions (67) qui, lorsqu'elles sont exécutées par le processeur, amènent le nœud de réseau radio (1) à signaler une alerte indiquant que l'attaque DoS est en cours.

20. Nœud de réseau radio (1) selon l'une quelconque des revendications 12 à 19, dans lequel les instructions pour déterminer qu'une attaque DoS est en cours comprennent des instructions (67) qui, lorsqu'elles sont exécutées par le processeur, amènent le nœud de réseau radio (1) à détecter une inondation de paquets de protocole de datagramme utilisateur, UDP.

21. Programme informatique (67, 91) pour la détection d'une attaque par déni de service, DoS, sur un dispositif amont (3, 5), le programme informatique comprenant un code de programme informatique qui, lorsqu'il est exécuté sur un nœud de réseau radio (1), amène le nœud de réseau radio (1) à :
obtenir des caractéristiques de trafic sur une communication entre un équipement utilisateur (2), UE, et le nœud de réseau radio (1), dans lequel les caractéristiques de trafic sont obtenues pour un protocole (21, 22, 23, 24) dans une pile de protocoles (20) pour une communication de réseau d'accès radio, RAN, entre l'UE (2) et le nœud de réseau radio (1), dans lequel le protocole est l'un parmi un protocole d'adaptation de données de service, SDAP, un protocole de convergence de données en paquets, PDCP, et une commande de liaison radio, RLC ; et
déterminer qu'une attaque DoS est en cours vers le dispositif amont (3, 5) sur la base des caractéristiques de trafic, dans lequel le dispositif amont (3, 5) est prévu en amont du nœud de réseau radio (1).

22. Produit de programme informatique (64, 90) comprenant un programme informatique selon la revendication 21 et un moyen lisible par ordinateur comprenant une mémoire non transitoire dans laquelle est stocké le programme informatique.
